# EUROPEAN PATENT SPECIFICATION

(11) **EP 0 631 436 B1**
(45) Date of publication and mention of the grant of the patent: **10.02.1999**
(21) Application number: 94109531.7
(22) Date of filing: 21.06.1994
(51) Int. Cl.: H04N 5/92

(54) **Apparatus for recording and reproducing compressed or non-compressed digital video data**
Gerät zur Aufzeichnung und Wiedergabe von komprimierten oder nich-komprimierten digitalen Videodaten
Appareil d'enregistrement et de reproduction de données vidéo numériques comprimées ou non-comprimées

(30) Priority: 22.06.1993 JP 150083/93
(43) Date of publication of application: 28.12.1994
(60) Divisional application: 95106159.7
(73) Proprietor: MATSUSHITA ELECTRIC INDUSTRIAL CO., LTD., Kadoma-shi, Osaka-fu, 571 (JP)
(72) Inventor: Ootsuka, Takeshi, Kadoma-Shi, Osaka 571 (JP); Bannai, Tatsushi, Sakai-Shi, Osaka 588 (JP); Hiratsuka, Sachio, Toyonaka-Shi, Osaka 560 (JP)
(74) Representative: Eisenführ, Speiser & Partner

(56) References cited:
- EP-A- 0 125 840
- EP-A- 0 499 303
- US-A- 4 316 223
- US-A- 4 727 411
- PATENT ABSTRACTS OF JAPAN vol. 12, no. 127 (E-602) 20 April 1988 & JP-A-62 253 277 (SONY CORP) 05 November 1987

## Description

### BACKGROUND OF THE INVENTION

### 1. Field of the Invention

The present invention relates to an apparatus for recording and reproducing compressed or non-compressed digital video data, in particular, to an apparatus for recording and reproducing compressed or non-compressed digital video data.

### 2. Description of the Related Art

As video tape recording and reproducing apparatuses (referred to as VTRs hereinafter) each for encoding a video signal into digital video signal, recording the digital video signal onto a magnetic tape and reproducing the recorded digital video signal from the magnetic tape, the following VTRs have been put into practical use:
(a) D1-VTR which uses a component signal as a signal to be recorded;
(b) D2-VTR which uses a composite signal as a signal to be recorded; and
(c) D3-VTR.

The details of the D1-VTR are disclosed in, for example, "SMPTE 227M 19-mm type D1 cassette-helical data and control record", SMPTE Journal, March 1992. In the D1-VTR, a video signal is sampled according to the so-called 4:2:2 method, and then the sampled signal is quantized into eight-bit digital video data, which is recorded onto a magnetic tape having a width of 1,905 cm. In the 4:2:2 method, the luminance signal is sampled at 13.5 MHz, and the two color difference signals are sampled at 6.75 MHz, respectively.

In the D2-VTR, the composite video signal is sampled at the frequency which is four times the frequency of the subcarrier signal, and then the sampled signal is quantized into eight-bit video data, which is recorded onto a magnetic tape having a width of 1,905 cm. However, since the magnetic tape has the width of 1,905 cm, the D2-VTR can not be reduced in the size and weight thereof, and this is requested for a camera integrally incorporated type VTR. According to these needs in the markets, the D3-VTR was manufactured as a product. In the D3-VTR, the composite video signal is quantized into eight-bit video data, and the video data is recorded onto a magnetic tape having a width of 1,27 cm.

In these digital VTRs, in order to deal with the transmission error caused in the recording and reproducing processes, a shuffling process is used in which the order of the data to be recorded onto a magnetic tape is changed so as to be different from that of the data as sampled. Executing the shuffling process can prevent errors from being caused in sequentially continuous sampled data, and can prevent errors from being caused in a plurality of data included in the same code sequence. This results in substantial improvement in the performance of the error concealment and in the performance of the error correction.

According to the recording apparatus for recording digital video signal disclosed in JP-A-62-253277, utilizing both of the first shuffling process performed in the unit of a block and the second shuffling process performed in the unit of a field can reduce influence of burst errors which may be caused in the recording and reproducing processes, thereby effectively performing the error correction and the error concealment.

However, the data amount which can be recorded in the above-mentioned digital VTRs is about 220 Mbps or about 130 Mbps, and therefore, these digital VTRs can not record digital video data having a data amount of 1.2 Gbps which is a wide band HDTV (High Definition Television) signal.

Under the above-mentioned circumstances, there has been developed a study of a compression VTR for reducing the digital video data having an extremely large data amount such as an HDTV signal or the like which is to be recorded by performing a compression process of the video data utilizing the characteristics of the video signal, and for recording the digital video data having the reduced data mount onto a magnetic tape. For example, according to the recording apparatus for recording digital component signal disclosed in JP-A-4-37293, a shuffling circuit is provided for changing the arrangement of the data in the unit of a block of the component signals which are located at the substantially same position in the same frame or the same field within the digital component signal. In the shuffling circuit, first of all, within one field, a plurality of blocks are formed in the digital video data, and then the digital video data is block-encoded in the unit of this block. Thereafter, the shuffling process is performed in the unit of this block, and the video data can be obtained in the unit of this block so that the block-decoding can be performed in the search process. Utilizing an orthogonal transform encoding method such as a DCT (Discrete cosine transform) or the like can perform a compression of video data so as to reduce the data amount of the digital video data to about 1/5 thereof.

In order to effectively put the above to practical use, there has been suggested a system for recording an HDTV signal which is obtained by providing a compression adapter for compressing data of the HDTV signal in addition to the VTR of the present TV system (525 scanning lines and 60 fields/second, or 625 scanning lines and 50 fields/second). It has been desired to provide a system for recording both of the TV signal of the present system and the HDTV signal, using one VTR.

However, in the conventional recording apparatus for recording the digital video signal disclosed in JP-A-62-253277, when the digital video data which has been compressed using a compression adapter or the like is inputted thereto, the order of the inputted digital video data is changed by the above-mentioned first and second shuffling processes. Therefore, the video data within the compression block which is the fundamental block of the data compression is recorded onto a magnetic tape so that the video data is dispersed. Then, in the high-speed reproducing process in which all the data recorded on the magnetic tape is not reproduced, or in the case that a burst break is caused due to damage of the magnetic tape, the compressed video data having a plurality of compression blocks is included in the digital video data which could not reproduced. As a result, the burst errors in the data on the magnetic tape are enlarged on a television display. This results in that the original image can not be reproduced on the television display.

Further, in the conventional recording apparatus for recording the digital component signal disclosed in JP-A-4-37293, there is no mention of recording the digital video data as it is without data compression. In this conventional recording apparatus for recording the digital component signal, when non-compressed digital video data is recorded and reproduced without data compression, the shuffling process is performed in the unit of a block. Therefore, when burst errors occur in the recording and reproducing processes, there are caused relatively continuous errors on the television display. Then, the performance of the error concealment process for predictively interpolating an error sample based on the samples located in the periphery of the error sample becomes lowered.

### SUMMARY OF THE INVENTION

The object of the present invention is therefore to provide an apparatus for recording and reproducing digital video data, capable of recording and reproducing both of non-compressed digital video data and compressed digital video data, and also capable of obtaining a better reproduced image even though a burst break is caused in the recorded data due to damage of a magnetic tape or in a high speed reproduction, when the compressed digital video data is recorded and reproduced.

Another object of the present invention is to provide an apparatus for recording and reproducing digital video data capable of concealing errors with a performance higher than that of the conventional apparatus, even when recording and reproducing compressed digital video data.

In order to achieve the aforementioned objective, according to one aspect of the present invention, there is provided an apparatus for recording digital video data, comprising:
memory means for storing digital video data inputted to said apparatus;
first memory controlling means for generating a write address and a read address of said first memory means so that an order of the digital video data read out from said first memory means is different from that of the digital video data written into said first memory means;
second memory controlling means for generating a write address and a read address of said first memory means so that an order of the digital video data read out from said first memory means is the same as that of the digital video data written into said first memory means;
switching means, responsive to a control signal from a first switching controller, for selectively switching over between a first switched state in which said first memory controlling means is connected to said first memory means when non-compressed digital video data are written into said memory means, and a second switched state in which said second memory controlling means is connected to said first memory means when compressed digital video data are written into said memory means; and
recording means for recording the digital video data read out from said first memory means onto a recording medium.

In the above-mentioned apparatus, said first memory controlling means preferably generates the write address and the read address of said first memory means so as to perform a shuffling process for the digital video data to make the digital video data to change the order of said digital video data by writing the digital video data using the write address in said first memory means and reading out the digital video data using the read address from said first memory means; and said second memory controlling means preferably generates the write address and the read address of said first memory means so as to perform a delay process for the digital video data without the shuffling process by writing the digital video data using the write address in said first memory means and reading out the digital video data using the read address from said first memory means.

According to a further aspect of the present invention, there is provided an apparatus for reproducing digital video data, comprising:
reproducing means for reproducing digital video data from a recording medium;
memory means for storing digital video data reproduced by said reproducing means;
first memory controlling means for generating a write address and a read address of said second memory means so that an order of the digital video data read out from said second memory means is different from that of the digital video data written into said second memory means;
second memory controlling means for generating a write address and a read address of said second memory means so that an order of the digital video data read out from said second memory means is the same as that of the digital video data written into said second memory means; and
switching means, responsive to a control signal from a switching controller, for selectively switching over between a first switched state in which said first memory controlling means is connected to said memory means when non-compressed digital video data are written into said memory means, and a second switched state in which said second memory controlling means is connected to said memory means when compressed digital video data are written into said memory means.

In the above-mentioned apparatus, said third memory controlling means preferably generates the write address and the read address of said second memory means so as to perform a deshuffling process for the digital video data to recover the original digital video data from the random digital video data by writing the digital video data using the write address in said second memory means and reading out the digital video data using the read address from said second memory means; and said fourth memory controlling means preferably generates the write address and the read address of said second memory means so as to perform a delay process for the digital video data without the deshuffling process by writing the digital video data using the write address in said second memory means and reading out the digital video data using the read address from said memory means.

According to a still further aspect of the present invention, there is provided an apparatus for recording and reproducing digital video data, comprising:
first memory means for storing digital video data inputted to said apparatus;
first memory controlling means for generating a write address and a read address of said first memory means so that an order of the digital video data read out from said first memory means is different from that of the digital video data written into said first memory means, and for thus performing a shuffling process for the digital video data to change the order of the digital video data by writing the digital video data using the write address in said first memory means and reading out the digital video data using the read address from said first memory means;
second memory controlling means for generating a write address and a read address of said first memory means so that the order of the digital video data read out from said first memory means is the same as that of the digital video data written into said first memory means and for thus performing a delay process for the digital video data without the shuffling process by writing the digital video data using the write address in said first memory means and reading out the digital video data using the read address from said first memory means;
first switching means responsive to a control signal from a first switching controller, for selectively switching over between a first switched state in which said first memory controlling means is connected to said first memory means when non-compressed digital video data are written into said first memory means, and a second switched state in which said second memory controlling means is connected to said first memory means when compressed digital video data are written into said first memory means;
error correction parity data adding means for adding error correction parity data to the digital video data read out from said first memory means and outputting the digital video data together with the error parity;
recording means for recording the digital video data and the error parity onto a recording medium.
reproducing means for reproducing digital video data and the error parity from said recording medium;
error correction means for correcting errors in the digital video data reproduced by said reproducing means on the basis of the error correction parity data reproduced by said reproducing means, generating an error flag when the digital video data can not be corrected by said error correction means, and outputting the digital video data together with the error flag representing the digital video data which can not be corrected;
second memory means for storing digital video data together with the error flag outputted from said error correction means;
third memory controlling means for generating a write address and a read address of said second memory means so as to perform a deshuffling process opposite to the shuffling process for the digital video data with the error flag to recover the original order of the digital video data by writing the digital video data using the write address in said second memory means and reading out the digital video data using the read address from said second memory means;
fourth memory controlling means for generating a write address and a read address of said second memory means so as to perform a delay process for the digital video data with the error flag without the deshuffling process by writing the digital video data using the write address in said second memory means and reading out the digital video data using the read address from said second memory means;
second switching means, responsive to a further control signal from a second switching controller, for selectively switching over between a first switched state in which said third memory controlling means is connected to said second memory means when non-compressed digital video data are written into said second memory means and a second switched state in which said fourth memory controlling means is connected to said second memory means when compressed digital video data are written into said second memory means; and
error concealment means for concealing the errors in the digital video data represented by the error flag read out from said second memory means by predictively interpolating the digital video data which could not be corrected by said error correction means, in the first switched state, and for not performing a process for concealing the error and outputting the compressed digital video data and error flag in the second switched state.

The above-mentioned apparatus preferably further comprises:
compression flag adding means for adding a compression flag indicating whether the digital video data are compressed or not so that said first memory means is connected to said second memory controlling means or said first memory controlling means,
wherein said second switching means switches over so that said second memory means is connected to said third memory controlling means when the compression flag indicates that the digital video data are not compressed, whereas said second switching means switches over so that said second memory means is connected to said fourth memory controlling means when the compression flag indicates that the digital video data are compressed.
When the control signal representing that non-compressed digital video data is inputted to said apparatus is inputted to said first switching means, said first memory controlling means is connected to said first memory means, and then the digital video data to be recorded is shuffled by said first memory controlling means. On the other hand, said third memory controlling means is connected to said second memory means, and then the reproduced digital video data is deshuffled by said third memory controlling means.

Meanwhile, when the control signal representing that compressed digital video data is inputted to said apparatus is inputted to said first switching means, said second memory controlling means is connected to said first memory means, and then the digital video data to be recorded is not shuffled and is delayed by said first memory controlling means. On the other hand, said fourth memory controlling means is connected to said second memory means, and then the reproduced digital video data is not deshuffled and is delayed by said third memory controlling means.

Accordingly, the apparatus of the present invention can record and reproduce both of non-compressed digital video data and compressed digital video data, and can obtain a better reproduced image even though a burst break is caused in the recorded data due to the damage of the magnetic tape or in the high speed reproduction, when the compressed digital video data is recorded and reproduced.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a schematic block diagram of an apparatus for recording and reproducing compressed or non-compressed digital video data, according to a first preferred embodiment of the present invention;
Fig. 2 is a schematic block diagram of a first memory controller 3, a second memory controller 4 and a first switch 5 which are shown in Fig. 1;
Fig. 3 is a front view of an image on a television display showing a method of dividing the image into a plurality of compression blocks;
Fig. 4 is a schematic block diagram showing digital video data written into and read out from a first line memory 2 in both cases of selecting the first and second memory controllers 3 and 4;
Fig. 5 is a schematic diagram showing compositions of a plurality of SYNC blocks which are used in the preferred embodiments; and
Fig. 6 is a schematic diagram showing compressed digital video data which is used in the preferred embodiments.

### DETAILED DESCRIPTION OF THE PREFERRED EMBODIMENTS

The preferred embodiments according to the present invention will be described below with reference to the attached drawings.

### FIRST PREFERRED EMBODIMENT

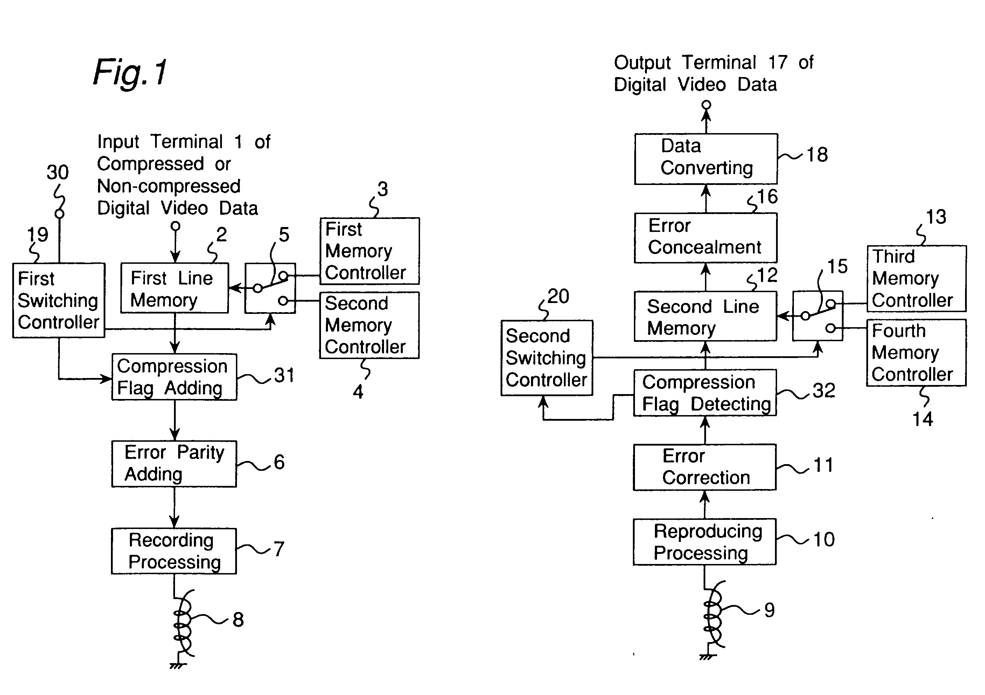

Fig. 1 is a schematic block diagram of an apparatus for recording and reproducing compressed or non-compressed digital video data (referred to as a recording and reproducing apparatus hereinafter), according to a first preferred embodiment of the present invention. In the first preferred embodiment, compressed or non-compressed digital video data is inputted through an input terminal 1, and then the digital video data is recorded and reproduced.

In the present preferred embodiment, when recording and reproducing non-compressed video data, the luminance signal of one horizontal scanning line is sampled at 18 MHz, whereas the two color difference signals of one horizontal scanning line are sampled at 9 MHz, respectively. Further, 960 samples of the luminance signal of one horizontal scanning line is quantized into eight-bit video data, whereas 480 samples of the color difference signal of one horizontal scanning line is quantized into eight-bit video data. Furthermore, the number of recording horizontal scanning lines is 255 lines/field. Therefore, when the digital video data compressed by the recording and reproducing apparatus of the present preferred embodiment is recorded and reproduced, the upper limit of the compressed digital video data is (255 x 2 x 960) Bytes.

The composition of the recording and reproducing apparatus of the first preferred embodiment will be described below in detail with reference to Fig. 1.

The recording and reproducing apparatus of the first preferred embodiment comprises:
(a) the input terminal 1 for inputting compressed or non-compressed digital video data;
(b) a first line memory 2 for temporarily storing digital video data inputted through the input terminal 1, wherein the first line memory 2 is a line memory for storing digital video data of one horizontal scanning line;
(c) a first memory controller 3 for performing a shuffling process every horizontal scanning line for the digital video data stored in the first line memory 2; and
(d) a second memory controller 4 for performing delay process for the digital video data stored in the first line memory 2 by a predetermined time interval, without the shuffling process.

The write address and the read address outputted from the first memory controller 3 are inputted through a first switch 5 to the first line memory 2, whereas the write address and the read address outputted from the second memory controller 4 are inputted through the first switch 5 to the first line memory 2. When a signal indicating that non-compressed digital video data is inputted through the input terminal 1 is inputted from an outer unit through an outer input terminal 30 to a first switching controller 19, the first switching controller 19 controls the first switch 5 to be switched over so that the first memory controller 3 is connected through the first switch 5 to the first line memory 2, and further outputs a compression flag "0" to a compression flag adding circuit 31. On the other hand, when a signal indicating that compressed digital video data is inputted through the input terminal 1 is inputted from the outer unit through the outer input terminal 30 to the first switching controller 19, the first switching controller 19 controls the first switch 5 to be switched over so that the second memory controller 4 is connected through the first switch 5 to the first line memory 2, and further outputs a compression flag "1" to the compression flag adding circuit 31.

The recording and reproducing apparatus of the first preferred embodiment further comprises:
(a) the compression flag adding circuit 31 for adding the compression flag "1" or "0" into the digital video data read out from the first line memory 2;
(b) an error parity adding circuit 6 for calculating an error parity every predetermined SYNC block and adding the calculated error parity to the digital video data outputted from the compression flag adding circuit 31;
(c) a recording processing circuit 7 for modulating a carrier signal according to the digital video data using a predetermined modulation method and amplifying the modulated signal; and
(d) a recording magnetic head 8 for recording the modulated signal outputted from the recording processing circuit 7, onto a magnetic tape.

Further, the recording and reproducing apparatus of the first preferred embodiment further comprises:
(a) a reproducing magnetic head 9 for reproducing the modulated signal recorded on the magnetic tape;
(b) a reproducing processing circuit 10 for amplifying the modulated signal reproduced by the reproducing magnetic head 9 and demodulating the amplified signal so as to obtain reproduced digital video data;
(c) an error correction circuit 11 for performing an error correction process for the digital video data outputted from the reproducing processing circuit 10;
(d) a compression flag detecting circuit 32 for detecting the compression flag "1" or "0" included in the digital video data outputted from the error correction circuit 11, outputting the compression flag to the second switching controller 20, removing the compression flag from the inputted digital video data, and then outputting the digital video data to a second line memory 12;
(e) the second line memory 12 for temporarily storing the digital video data outputted from the compression flag detecting circuit 32, wherein the second line memory 12 is a line memory for storing digital video data of one horizontal scanning line;
(f) a third memory controller 13 for performing a deshuffling process which is opposite to the shuffling process of the first memory controller 3, every horizontal scanning line, for the digital video data stored in the second line memory 12; and
(g) a fourth memory controller 14 for performing a delay process for the digital video data stored in the second line memory 12 by a predetermined time interval, without the deshuffling process.

In response to the compression flag "0" indicating that the reproduced digital video data is the non-compressed video data, the second switching controller 20 controls a second switch 15 to be switched over so that the third memory controller 13 is connected through the second switch 15 to the second line memory 12. On the other hand, in response to the compression flag "1" indicating that the reproduced digital video data is the compressed video data, the second switching controller 20 controls the second switch 15 to be switched over so that the fourth memory controller 13 is connected through the second switch 15 to the second line memory 12.

Furthermore, the recording and reproducing apparatus of the first preferred embodiment further comprises:
(a) an error concealment circuit 16 for performing an error concealment process for the digital video data read out from the second line memory 12, by predictively interpolating the inputted digital video data which could not be corrected by the error correction circuit 11; and
(b) a data converting circuit 18 for converting eight-bit digital video data into ten-bit data including two bits composed of an error flag and an inverted signal of the error flag signal, and outputting the converted data including the eight-bit digital video data, the error flag, and the inverted signal of the error flag, through an output terminal 17 to an outer unit.

The operation of the recording and reproducing apparatus of the first preferred embodiment will be described below in detail with reference to Fig. 1.

First of all, the case where non-compressed digital video data is recorded and reproduced will be described below. When non-compressed digital video data is inputted through the input terminal 1 to the first line memory 2, the signal indicating that the non-compressed digital video data is inputted through the input terminal 1 is inputted through the input terminal 30 to the first switching controller 19, and then the first switching controller 19 controls the first switch 5 to be switched over so that the first memory controller 3 is connected through the first switch 5 to the first line memory 2. On the other hand, the non-compressed digital video data is written into the first line memory 2 every horizontal scanning line by the write control of the first memory controller 3. Thereafter, the digital video data written in the first line memory 2 is read out therefrom by read control of the first memory controller 3 in an order different from that when writing the digital video data in the first line memory 2, wherein the process for changing the order is called a shuffling process.

In the present preferred embodiment, the digital video data is shuffled within one horizontal scanning line with one block of one horizontal scanning line. In this case, the order of the digital video data is preferably changed so that the adjacent samples are located far away from each other as far as possible on a track of the magnetic tape.

The digital video data shuffled by the first memory controller 3 being read out from the first line memory 2 is inputted to the compression flag adding circuit 31, which then adds the compression flag "0" to the inputted digital video data and thereafter outputs the digital video data with the compression flag "0" to the error parity adding circuit 6. Thereafter, the error parity adding circuit 6 calculates a parity code such as the Reed Solomon code which is known to those skilled in the art, or the like, based on the inputted digital video data, adds the parity code to the inputted digital video data, and then outputs the digital video data with the parity code through the recording processing circuit 7 including the modulation and amplification functions to the recording magnetic head 8, thereby recording the digital video signal onto a magnetic tape (not shown). Adding the parity code thereto can remove almost all the data errors which may be caused in the recording and reproducing processes, in the error correction circuit 11 of the reproducing side.

On the other hand, the digital video signal reproduced by the reproducing magnetic head 9 is inputted as the digital video data to the error correction circuit 11 through the reproducing processing circuit 10 including the amplification and demodulation functions. Thereafter, the error correction circuit 11 performs the error correction process for the reproduced digital video data based on the parity code included in the reproduced digital video data, and outputs to the compression flag detecting circuit 32, not only the corrected digital video data but also an error flag representing the position of the digital video data which could not be corrected by the error correction circuit 11. Then the compression flag detecting circuit 32 detects the compression flag "0" included in the digital video data, outputs the detected compression flag "0" to the second switching controller 20, removes the compression flag "0" from the inputted digital video data, and then outputs the digital video data together with the error flag after removing the compression flag "0", to the second line memory 12.

In response to the compression flag "0", the second switching controller 20 controls the second switch 15 to be switched over so that the third memory controller 13 is connected through the second switch 15 to the second line memory 12. In this case, the digital video data with the error flag is written in the second line memory 12 and is read out therefrom by the third memory controller 13 performing the deshuffling process which is opposite to the shuffling process of the first memory controller 3, so that the order of the digital video data written in the second line memory 12 is returned to the same order as that of the digital video data written in the first line memory 2.

The digital video data together with the error flag is read out from the second line memory 12 is inputted to the error concealment circuit 16, which then predictively interpolates the pixel data judged as the error data based on the above-mentioned error flag, from the adjacent pixel data located in the periphery of the judged pixel data, and outputs the interpolated digital video data to the data converting circuit 18. In this case, the data converting circuit 18 inserts a synchronizing signal or code etc. into the inputted digital video data according to a data format represented in the CCIR No. 601 Recommendation without performing another particular process, and then outputs the digital video data together with the synchronizing signal or code through the output terminal 17.

As described above, in the case of recording the non-compressed digital video data onto the magnetic tape, the digital video data is recorded after the shuffling process. Therefore, the burst errors on the magnetic tape are dispersed in an image displayed on the television display, and there becomes a higher possibility that a pixel data adjacent to an error pixel data does not become errorneous . As a result, the performance of the error concealment process for predictively interpolating the error pixel data based on the pixel data located in the periphery of the error pixel data can be heightened.

Next, the case where compressed digital video data is recorded and reproduced will be described below. In the present preferred embodiment, when the compressed digital video data is recorded, a predetermined compression adapter (not shown) is connected to the input terminal 1, and the compressed digital video data is inputted to the input terminal 1.

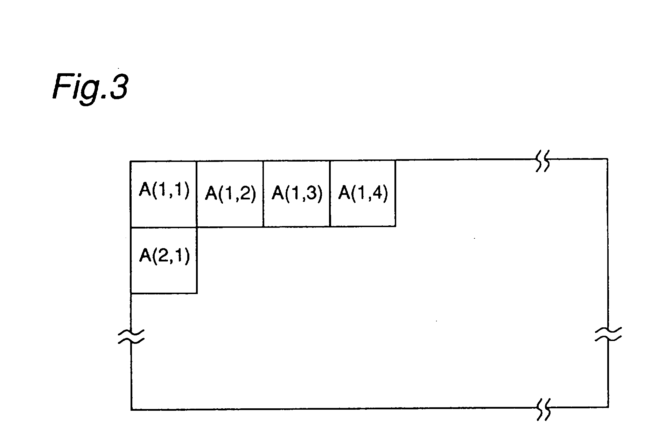

Fig. 3 is a front view of an image on a television display showing a method of dividing the image into a plurality of compression blocks. As shown in Fig. 3, the video data of one field is divided into a plurality of blocks A(1, 1), A(1, 2), A(1, 3), ... in an order thereof. In the compression adapter of the present preferred embodiment, as shown in Fig. 3, for example, the video data of one field is compressed so that the digital video data of 8 pixels × 8 horizontal scanning lines is packaged as one compression block. Within the compression block, for example, the discrete cosine transform (referred to as a DCT hereinafter) etc. is performed for the digital video data, and thereafter, the digital video data after the DCT is converted into a Huffman code etc. The Huffman-coded digital video data is outputted from the compression adapter (not shown) through the input terminal 1 to the recording and reproducing apparatus of the first preferred embodiment. In this case, the second and fourth memory controllers 4 and 14 are used, and then the second memory controller 4 is connected through the first switch 5 to the first line memory 2 and the fourth memory controller 14 is connected through the second switch 15 to the second line memory 12. Then, the compressed digital video data is written into the first line memory 2, and then is read out from the first line memory 2 performing only the delay process without the shuffling process by the second memory controller 4.

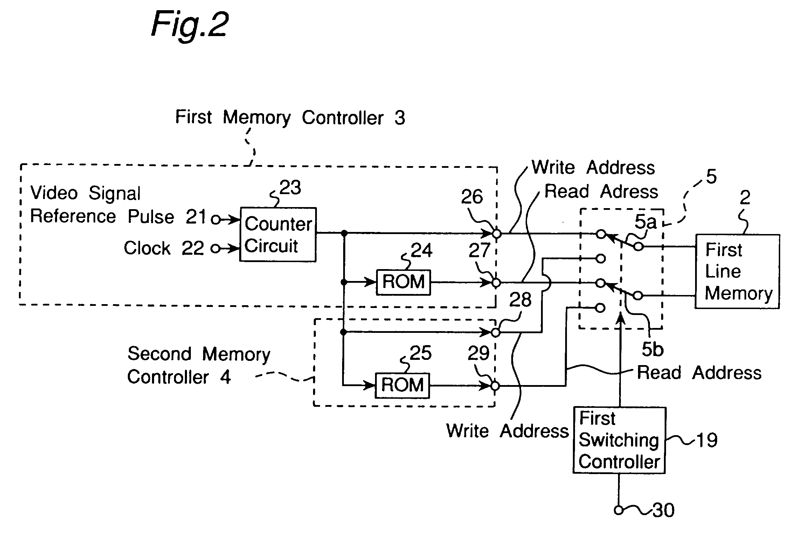

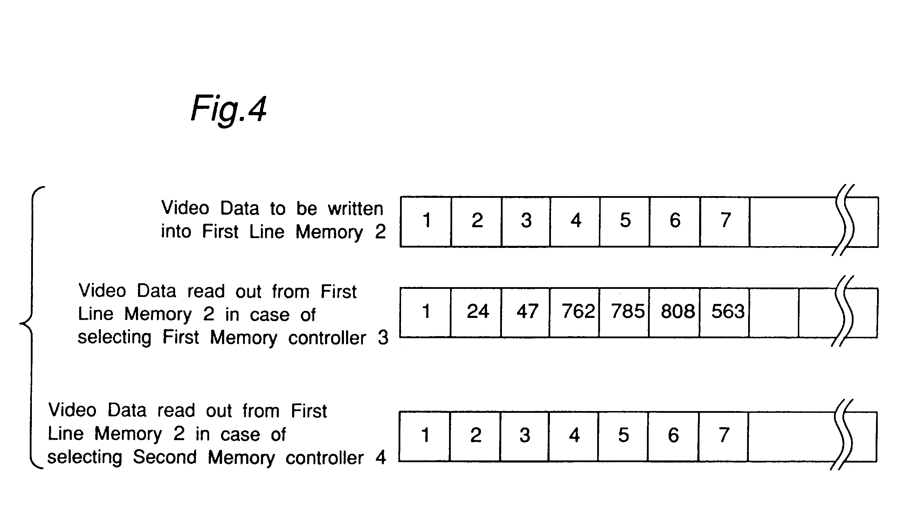

Next, the composition and operation of the first and second memory controllers 3 and 4 will be further described below in details with reference to Figs. 2 and 4. Fig. 2 is a schematic block diagram of the first memory controller 3, the second memory controller 4 and the first switch 5 which are shown in Fig. 1.

Referring to Fig. 2, 21 denotes a video signal reference pulse such as a horizontal synchronizing signal or the like which becomes a reset signal for a counter circuit 23 as described later; 22 denotes a clock such as a pixel clock; 23 denotes a counter circuit for counting the clock and outputting an address representing the counts of the clocks; 24 denotes a first read only memory (a read only memory is referred to as a ROM hereinafter) for converting the output address from the counter circuit 23 into a first read address 27; 25 denotes a second ROM for converting the output address from the counter circuit 23 into a second read address 29; 26 denotes a first write address which is the same as the output address from the counter circuit 23; and 28 denotes a second write address which is the same as the output address from the counter circuit 23.

The first switch 5 comprises switches 5a and 5b, which are controlled by the first switching controller 19 as described above.

The operation of the first and second memory controllers 3 and 4 will be described below in details.

The video signal reference pulse 21 such as the horizontal synchronizing signal or the like and the clock 22 are inputted to the counter circuit 23, which is reset in response to the video signal reference pulse 21, and thereafter counts the number of the clocks 22. In other words, the number of counts of the counter circuit 23 or the output address is incremented by one every leading edge of the clock 22. The output address of the counter circuit 23 becomes not only the first write address 26 which is an output of the first memory controller 3, but also the second write address 28 which is an output of the second memory controller 4. Further, the output address of the counter circuit 23 is inputted to the address terminal of the first ROM 24, which converts the inputted address into the first read address which is another output of the first memory controller 3. Furthermore, the output address of the counter circuit 23 is inputted to the address terminal of the second ROM 25, which converts the inputted address into the second read address which is another output of the second memory controller 4.

When the non-compressed digital video data is inputted through the input terminal 1, the write address 26 and the read address 27 which are outputted from the first memory controller 3 are inputted through the switches 5a and 5b to the first line memory 2. On the other hand, when the compressed digital video data is inputted through the input terminal 1, the write address 28 and the read address 29 which are outputted from the second memory controller 4 are inputted through the switches 5a and 5b to the first line memory 2.

Fig. 4 is a schematic block diagram showing video data written into and read out from a first line memory 2 in both the cases of selecting the first and second memory controllers 3 and 4. In Fig. 4, 1, 2, 3, ... denote the numbers of the digital video data on the horizontal scanning line. The upper view of Fig. 4 shows the order of the digital video data to be written into the first line memory 2.

The middle view of Fig. 4 shows the order of the digital video data read out from the first line memory 2 in the case of selecting the first memory controller 3. This shows the shuffling process.

On the other hand, the lower view of Fig. 4 shows the order of the digital video data read out from the first line memory 2 in the case of selecting the second memory controller 4. This shows only delay process without performing the shuffling process.

In the present preferred embodiment, even when one data selected among the non-compressed digital video data and the compressed digital video data is recorded onto the magnetic tape, the inputted digital video data is written into the first line memory 2 in the order when they are inputted to the input terminal 1 since the output address of the counter circuit 23 becomes the write address 26 or 28 as it is. On the other hand, upon reading out the digital video data from the first line memory 2, since the read address is converted into the write address by the ROM 24 or 25, by changing only the contents of the ROM 24 and 25, it is determined whether or not the shuffling process is to be performed.

When the non-compressed digital video data is inputted to the input terminal 1, the first memory controller 3 is selected, and then the digital video data is read out from the first line memory 2 performing the shuffling process as shown in the middle view of Fig. 4. On the other hand, when the compressed digital video data is inputted to the input terminal 1, the second memory controller 4 is selected, and then the digital video data is read out from the first line memory 2 in the same order as that when writing the same in the first line memory 2 as shown in the lower view of Fig. 4.

In the present preferred embodiment, the read address for the first line memory 2 is converted by the ROMs 24 and 25, however, the present invention is not limited to this. The converting ROMs may be provided in the write address lines.

In the present preferred embodiment, the ROMs are used as means for converting the address, however, the present invention is not limited to this. The address may be converted by calculating the address using a calculation circuit.

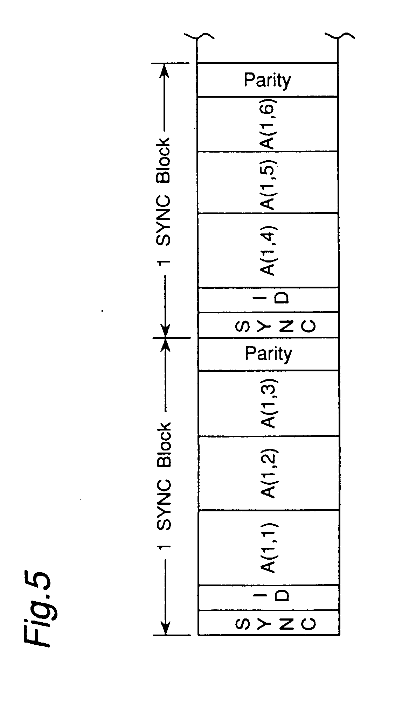

Referring back to Fig. 1 in the case of selecting the second memory controller 4, the compressed digital video data read out from the first line memory 2 by control of the second memory controller 4 is inputted to the compression flag adding circuit 31, and then the compression flag "1" is added to the read-out digital video data by the compression flag adding circuit 31. Thereafter, the compressed digital video data together with the compression flag "1" is inputted to the error parity adding circuit 6, which forms a block to be recorded onto a magnetic tape as shown in Fig. 5. Hereinafter, the unit block when recording the digital video data onto the magnetic tape is referred to as a SYNC block. As is apparent from Fig. 5, one SYNC block is composed of the following:
(a) a synchronizing signal (SYNC) representing a start of the block on the magnetic tape;
(b) an index signal (ID) representing a position of the block;
(c) three-block digital video data; and
(d) an error correction parity for the error correction process to be performed by the error correction circuit 11.

In Fig. 5, the digital video data A(1, 1), A(1, 2), A(1, 3), ... correspond to the block numbers of the compression blocks shown in Fig. 3. In this case, the second memory controller 4 is selected and then the shuffling process is not performed. Therefore, the digital video data of one compression block are arranged so as not to be included over a plurality of SYNC blocks. In other words, the number of the compression blocks included in one SYNC block can be suppressed to the necessary lower limit. Therefore, for example, upon the search operation, when all the digital video data recorded on the magnetic tape is not reproduced, the reproduced digital video data which has been compressed in the unit of the SYNC block can be recovered or restored. Further, even when one SYNC block is removed or broken due to damage of the magnetic tape or the like, this relatively reduces the influence to many compression blocks.

The signal processing when reproducing the compressed digital video data will be described below in detail.

The modulated digital video signal reproduced by the reproducing magnetic head 9 is inputted to the reproducing producing circuit 10, which amplifies and demodulates the reproduced modulated digital video signal, thereby obtaining and outputting the digital video data to the error correction circuit 11. Then the error correction circuit 11 performs the error correction process for the reproduced digital video data in a manner similar to that as described above, and outputs the digital video data together with the error flag representing the position of the digital video data which could not be corrected by the error correction circuit 11, through the compression flag detecting circuit 32 to the second line memory 12.

The compression flag detecting circuit 32 detects the compression flag "1" included in the digital video data, and then outputs the compression flag "1" to the second switching controller 20. In response to the compression flag "1", the second switching controller 20 controls the second switch 15 to be switched over so that the fourth memory controller 14 is connected through the second switch 15 to the second line memory 12. That is, the write and read operation of the second line memory 12 is controlled by the fourth memory controller 14. The control operation of the fourth memory controller 14 is opposite to that of the second memory controller 4, and in this case, since the digital video data has not been shuffled in the recording side, the digital video data stored in the second line memory 12 is read out in the same order as the order when writing the digital video data. The digital video data read out from the second line memory 12 is inputted to the error concealment circuit 16. When the compressed digital video data is reproduced, the error concealment process is not performed in this case. That is, the operation of the error concealment circuit 16 is disabled in this case. The digital video data together with the error flag added by the error correction circuit 11 is inputted to the data converting circuit 18, which converts the inputted data into the digital video data in a manner as described later in details. Thereafter, the converted digital video data is outputted through the output terminal 17.

When the compressed digital video data is recorded in the manner as described above, the shuffling and deshuffling processes are not performed. Therefore, the fundamental data of one compression block is included in one SYNC block. Even when one SYNC block is damaged or broken due to damage of the magnetic tape or the like, the influence can not be propagated to many compression blocks.

In the present preferred embodiment, one SYNC block includes three compression blocks, such as A(1 ,1), A(1, 2) and A(1, 3), which are to be packaged as a set of compression blocks, however, the present invention is not limited to this. One SYNC block may includes one or more compression blocks which are to be packaged as a set of compression blocks. Only relatively important data of the compression block may be packaged as only single SYNC block.

In the present preferred embodiment, the operation of the error parity adding circuit 6 is not described in details. The error parity may be in a product form including an inner party and an outer parity, in order to heighten the performance of the error correction.

The operation of the data converting circuit 18 will be described below in detail.

In the data converting circuit 18, the error flag representing the digital video data which could not be corrected by the error correction circuit 11 and the inverted signal of the error flag are assigned as the most significant two bits, whereas the digital video data is assigned as the lower eight bits, thereby extending the reproduced digital video data into ten bits. This extended reproduced digital video data is outputted through the output terminal 17.

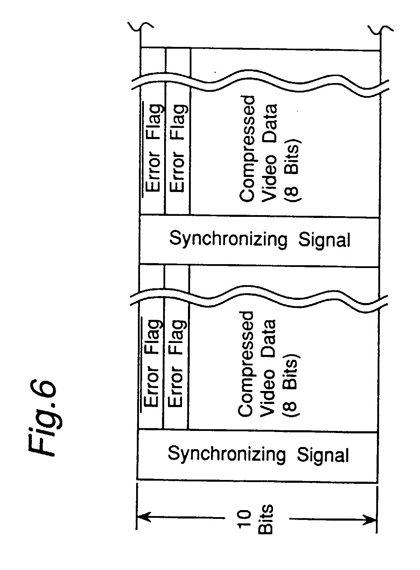

Fig. 6 is a schematic diagram showing the compressed digital video data which is outputted from the data converting circuit 18.

Referring to Fig. 6, the inverted flag of the error flag is assigned to the most significant bit (MSB) or 10-th bit, the error flag is assigned to the 9-th bit, and the compressed digital video data is assigned to the lower eight bits from 8-th to first bits. Further, the synchronizing signal is assigned as ten bits of the start and end of the effective sample of one horizontal scanning line. The synchronizing signal is constituted by "3FF" and "000" in the hexadecimal notation in a data format which is represented in the CCIR No. 601 Recommendation. Therefore, in the interface of ten bits thereof, "3FF" and "000" in the hexadecimal notation of the digital video data are set as inhibit code. Therefore, in the present preferred embodiment, the error flag and the inverted signal of the error flag are assigned to the MSB and the 9-th bit, and "3FF" and "000" in the hexadecimal notation are inhibited or prohibited in the region of the digital video data.

Accordingly, the error flag representing detecting the error position caused upon the reproducing process can be transmitted to an outer unit such as a compression adapter or the like, using an interface in conformity to the data format represented in the CCIR No. 601 Recommendation, and then an error concealment process can be performed by the above-mentioned compression adapter for recovering or restoring the compressed digital video data after recovering or restoring the same. This results in obtaining a better quality of reproduced image on a television display.

## Claims

1. An apparatus for recording digital video data, comprising:
memory means (2) for storing digital video data inputted to said apparatus; and
recording means (7, 8) for recording the digital video data read out from said first memory means onto a recording medium;
characterized by
first memory controlling means (3) for generating a write address and a read address of said memory means (2) so that an order of the digital video data read out from said memory means (2) is different from that of the digital video data written into said memory means (2);
second memory controlling means (4) for generating a write address and a read address of said memory means (2) so that an order of the digital video data read out from said memory means (2) is the same as that of the digital video data written into said memory means (2); and
switching means (5), responsive to a control signal from a switching controller (19), for selectively switching over between a first switched state in which said first memory controlling means (3) is connected to said memory means (2) when non-compressed digital video data are written into said memory means (2), and a second switched state in which said second memory controlling means (4) is connected to said memory means (2) when compressed digital video data are written into said memory means (2).

2. The apparatus as claimed in claim 1,
wherein said first memory controlling means (3) generates the write address and the read address of said first memory means (2) so as to perform a shuffling process for the digital video data to change the order of the digital video data by writing the digital video data using the write address in said first memory means (2) and reading out the digital video data using the read address from said first memory means (2); and
wherein said second memory controlling means (4) generates the write address and the read address of said first memory means (2) so as to perform a delay process for the digital video data without the shuffling process by writing the digital video data using the write address in said first memory means (2) and reading out the digital video data using the read address from said first memory means (2).

3. An apparatus for reproducing digital video data, comprising:
reproducing means (9, 10) for reproducing digital video data from a recording medium; and
memory means (12) for storing digital video data reproduced by said reproducing means (9, 10);
characterized by
first memory controlling means (13) for generating a write address and a read address of said memory means (12) so that an order of the digital video data read out from said memory means (12) is different from that of the digital video data written into said memory means (12);
second memory controlling means (14) for generating a write address and a read address of said memory means (12) so that an order of the digital video data read out from said memory means (12) is the same as that of the digital video data written into said memory means (12); and
switching means (15), responsive to a control signal from a switching controller (20), for selectively switching over between a first switched state in which said first memory controlling means (13) is connected to said memory means (12) when non-compressed digital video data are written into said memory means (12), and a second switched state in which said second memory controlling means (14) is connected to said memory means (12) when compressed digital video data are written into said memory means (12).

4. The apparatus as claimed in claim 3,
wherein said first memory controlling means (13) generates the write address and the read address of said memory means (12) so as to perform a deshuffling process for the digital video data to recover the original order of the digital video data by writing the digital video data using the write address in said second memory means and reading out the digital video data using the read address from said memory means (12); and
wherein said second memory controlling means (14) generates the write address and the read address of said memory means (12) so as to perform a delay process for the digital video data without the deshuffling process by writing the digital video data using the write address in said memory means (12) and reading out the digital video data using the read address from said memory means (12).

5. The apparatus as claimed in claim 1 or 2,
error correction parity data adding means (6) for adding error correction parity data to the digital video data read out from said memory means (2) and outputting the digital video data together with the error correction parity data.

6. The apparatus as claimed in claim 3 or 4,
wherein said digital video data includes error correction parity data, further comprising error correction means (11) for correcting errors in the digital video data reproduced by said reproducing means (9, 10) on the basis of the error correction parity data reproduced by said reproducing means (9, 10), generating an error flag when the digital video data can not be corrected by said error correction means (11), and outputting the digital video data together with the error flag representing the digital video data which can not be corrected, wherein said memory means (12) stores said digital video data together with the error flag outputted from said error correction means (11); and error concealment means (16) for concealing the error in the digital video data represented by the error flag read out from said memory means (12) by predictively interpolating the digital video data which could not be corrected by said error correction means (11) in the first switched state, and for not performing a process for concealing the error and outputting the compressed digital video data and the error flag outputted from said error correction means (11) in the second switched state.

7. An apparatus for recording and reproducing digital video data, comprising:
first memory means (2) for storing digital video data inputted to said apparatus; error correction parity data adding means (6) for adding error correction parity data to the digital video data read out from said first memory means (2) and outputting the digital video data together with the error correction parity data,
recording means (7, 8) for recording the digital video data and the error parity onto a recording medium;
reproducing means (9, 10) for reproducing digital video data and the error parity from said recording medium; and
second memory means (12) for storing digital video data;
characterized by
first memory controlling means (3) for generating a write address and a read address of said first memory means (2) so that an order of the digital video data read out from said first memory means (2) is different from that of the digital video data written into said first memory means (2), and for thus performing a shuffling process for the digital video data to change the order of the digital video data by writing the digital video data using the write address in said first memory means (2) and reading out the digital video data using the read address from said first memory means (2);
second memory controlling means (4) for generating a write address and a read address of said first memory means (2) so that the order of the digital video data read out from said first memory means (2) is the same as that of the digital video data written into said first memory means (2) and for thus performing a delay process for the digital video data without the shuffling process by writing the digital video data using the write address in said first memory means (2) and reading out the digital video data using the read address from said first memory means (2);
first switching means (5), responsive to a control signal from a first switching controller (19), for selectively switching over between a first switched state in which said first memory controlling means (3) is connected to said first memory means (2) when non-compressed digital video data are written into said first memory means (2), and a second switched state in which said second memory controlling means (4) is connected to said first memory means (2) when compressed digital video data are written into said first memory means (2);
error correction means (11) for correcting errors in the digital video data reproduced by said reproducing means (9, 10) on the basis of the error correction parity data reproduced by said reproducing means (9, 10), generating an error flag when the digital video data can not be corrected by said error correction means (11), and outputting the digital video data together with the error flag representing the digital video data which can not be corrected to said second memory means (12); third memory controlling means (13) for generating a write address and a read address of said second memory means (12) so as to perform a deshuffling process opposite to the shuffling process for the digital video data with the error flag to recover the original order of the digital video data by writing the digital video data using the write address in said second memory means (12) and reading out the digital video data using the read address from said second memory means (12);
fourth memory controlling means (14) for generating a write address and a read address of said second memory means (12) so as to perform a delay process for the digital video data with the error flag without the deshuffling process by writing the digital video data using the write address in said second memory means (12) and reading out the digital video data using the read address from said second memory means (12);
second switching means (15), responsive to a further control signal from a second switching controller (20), for selectively switching over between a first switched state in which said third memory controlling means (13) is connected to said second memory means (12) when non-compressed digital video data are written into said second memory means (12), and a second switched state in which said fourth memory controlling means (14) is connected to said second memory means (12) when compressed digital video data are written into said second memory means (12); and
error concealment means (16) for concealing the errors in the digital video data represented by the error flag read out from said second memory means (12) by predictively interpolating the digital video data which could not be corrected by said error correction means (11) in the first switched state, and for not performing a process for concealing the error and outputting the compressed digital video data and the error flag outputted from said error correction means (11) in the second switched state.

8. The apparatus as claimed in claim 7, further comprising:
compression flag adding means (31) for adding a compression flag indicating whether the digital video data are compressed or not so that said first memory means (2) is connected to said second memory controlling means (4) or said first memory controlling means (3), respectively,
wherein said second switching means (15) switches over so that said second memory means (12) is connected to said third memory controlling means (13) when the compression flag indicates that the digital video data are not compressed, whereas said second switching means (15) switches over so that said second memory means (12) is connected to said fourth memory controlling means (14) when the compression flag indicates that the digital video data are compressed.

## Patentansprüche

1. Vorrichtung zum Aufzeichnen digitaler Videodaten, enthaltend:
Speichermittel (2) zum Speichern digitaler Videodaten, die in die Vorrichtung eingegeben wurden; und
Aufzeichnungsmittel (7, 8) zum Aufzeichnen der digitalen Videodaten, die aus den ersten Speichermitteln ausgelesen wurden, auf ein Aufzeichnungsmedium,
gekennzeichnet durch
erste Speichersteuermittel (3) zum Erzeugen einer Schreibadresse und einer Leseadresse der Speichermittel (2), so daß eine Reihenfolge der digitalen Videodaten, die aus den Speichermitteln (2) ausgelesen wurden, unterschiedlich ist von der der in die Speichermittel (2) eingeschriebenen digitalen Videodaten;
zweite Speichersteuermittel (4) zum Erzeugen einer Schreibadresse und einer Leseadresse der Speichermittel (2), so daß eine Reihenfolge der digitalen Videodaten, die aus den Speichermitteln (2) ausgelesen wurden, die gleiche ist, wie die der in die Speichermittel (2) eingeschriebenen digitalen Videodaten; und Schaltmittel (5), die auf ein Steuersignal von einem Schaltsteuergerät (19) reagieren, zum selektiven Umschalten zwischen einem ersten geschalteten Zustand, in welchem die ersten Speichersteuermittel (3) mit den Speichermitteln (2) verbunden sind, wenn nicht komprimierte digitale Videodaten in die Speichermittel (2) eingeschrieben sind, und einem zweiten Schaltzustand, in welchem die zweiten Speichersteuermittel (4) mit den Speichermitteln (2) verbunden sind, wenn komprimierte digitale Videodaten in die Speichermittel (2) geschrieben sind.

2. Vorrichtung nach Anspruch 1,
wobei die ersten Speichersteuermittel (3) die Leseadresse und die Schreibadresse der ersten Speichermittel (2) erzeugen, um einen Verschiebeprozeß für die digitalen Videodaten auszuführen, um die Reihenfolge der digitalen Videodaten zu ändern, indem die digitalen Videodaten unter Verwendung der Schreibadresse in das erste Speichermittel (2) geschrieben werden, und indem die digitalen Videodaten unter Verwendung der Leseadresse aus den ersten Speichermitteln (2) ausgelesen werden; und
wobei die zweiten Speichersteuermittel (4) die Schreibadresse und die Leseadresse des ersten Speichermittels (2) erzeugen, um einen Verzögerungsprozeß für die digitalen Videodaten ohne den Verschiebeprozeß auszuführen, indem die digitalen Videodaten unter Verwendung der Schreibadresse in die ersten Speichermittel (2) geschrieben werden, und indem die digitalen Videodaten unter Verwendung der Leseadresse aus dem ersten Speichermittel (2) ausgelesen werden.

3. Vorrichtung zum Wiedergeben digitaler Videodaten, enthaltend:
Wiedergabemittel (9, 10) zum Wiedergeben digitaler Videodaten von einem Aufzeichnungsmedium; und
Speichermittel (12) zum Speichern digitaler Videodaten, die von den Wiedergabemitteln (9, 10) wiedergegeben wurden;
gekennzeichnet durch
erste Speichersteuermittel (13) zum Erzeugen einer Schreibadresse und einer Leseadresse der Speichermittel (12), so daß eine Reihenfolge der aus den Speichermitteln (12) ausgelesenen digitalen Videodaten unterschiedlich ist von der der in die Speichermittel (12) eingeschriebenen digitalen Videodaten;
zweite Speichersteuermittel (14) zum Erzeugen einer Schreibadresse und einer Leseadresse der Speichermittel (12), so daß eine Reihenfolge der aus den Speichermitteln (12) ausgelesenen digitalen Videodaten die gleiche ist, wie die der in die Speichermittel (12) eingeschriebenen digitalen Videodaten; und
Schaltmittel (15), die auf ein Steuersignal eines Schaltsteuergerätes (20) reagieren, um selektiv umzuschalten zwischen einem ersten geschalteten Zustand, in welchem die ersten Speichersteuermittel (13) mit den Speichermitteln (12) verbunden sind, wenn nicht komprimierte digitale Videodaten in die Speichermitteln (12) eingeschrieben sind, und einem zweiten Schaltzustand, in welchem die zweiten Speichersteuermittel (14) mit den Speichermitteln (12) verbunden sind, wenn komprimierte digitale Videodaten in die Speichermittel (12) eingeschrieben sind.

4. Vorrichtung nach Anspruch 3,
wobei die ersten Speichersteuermittel (13) die Schreibadresse und die Leseadresse der Speichermittel (12) erzeugen, um einen Entverschiebungsprozeß für die digitalen Videodaten auszuführen, um die ursprüngliche Reihenfolge der digitalen Videodaten durch Schreiben der digitalen Videodaten unter Verwendung der Schreibadresse in die zweiten Speichermittel und Auslesen der digitalen Videodaten unter Verwendung der Leseadresse aus den Speichermitteln (12) wiederzugewinnen; und
wobei die zweiten Speichersteuermittel (14) die Schreibadresse und die Leseadresse der Speichermittel (12) erzeugen, um somit einen Verzögerungsprozeß für die digitalen Videodaten ohne den Endverschiebeprozeß zu erzeugen, indem die digitalen Videodaten unter Verwendung der Schreibadresse in den Speichermitteln (12) eingeschrieben werden, und indem die digitalen Videodaten unter Verwendung der Leseadresse der Speichermittel (12) ausgelesen werden.

5. Vorrichtung nach Anspruch 1 oder 2,
Fehlerkorrekturparitätsdatenhinzufügungsmittel (6) zum Hinzufügen von Fehlerkorrekturparitätsdaten zu den digitalen Videodaten, die aus den Speichermitteln (2) ausgelesen wurden, und zum Ausgeben der digitalen Videodaten zusammen mit den Fehlerkorrekturparitätsdaten.

6. Vorrichtung nach Anspruch 3 oder 4,
wobei die digitalen Videodaten Fehlerkorrekturparitätsdaten einschließen, weiterhin enthaltend Fehlerkorrekturmittel (11) zum Korrigieren von Fehlern in den digitalen Videodaten, die durch die Wiedergabemittel (9, 10) wiedergegeben wurden, auf der Basis der durch die Wiedergabemittel (9, 10) wiedergegebenen Fehlerkorrekturparitätsdaten, zum Erzeugen eines Fehlerflag, wenn die digitalen Videodaten durch die Fehlerkorrekturmittel (11) nicht korregiert werden können, und zum Ausgeben der digitalen Videodaten zusammen mit dem Fehlerflag, welcher die digitalen Videodaten darstellt, welche nicht korrigiert werden können, wobei die Speichermittel (12) die digitalen Videodaten zusammen mit dem Fehlerflag, welcher durch die Fehlerkorrekturmittel (11) ausgegeben wurde, speichern; und Fehlerverschleierungsmittel (16) zum Verschleiern des in den durch den Fehlerflag repräsentierten digitalen Videodaten enthaltenen Fehlers, die aus den Speichermitteln (12) ausgelesen wurden, durch vorhersagendes Interpolieren der digitalen Videodaten, die durch die Fehlerkorrekturmittel (11) in dem ersten umgeschalteten Zustand nicht korrigiert werden konnten, und zum Nichtausführen eines Prozesses zum Verschleiern des Fehlers und zum Ausgeben der komprimierten digitalen Videodaten und des von den Fehlerkorrekturmitteln (11) ausgegebenen Fehlerflag in dem zweiten umgeschalteten Zustand.

7. Vorrichtung zum Aufzeichnen und Wiedergeben digitaler Videodaten, enthaltend:
erste Speichermittel (2) zum Speichern digitaler Videodaten, die in die Vorrichtung eingegeben wurden;
Fehlerkorrekturparitätsdatenhinzufügungsmittel (6) zum Hinzufügen von Fehlerkorrekturparitätsdaten zu den digitalen Videodaten, die aus den ersten Speichermitteln (2) ausgelesen wurden, zum Ausgeben der digitalen Videodaten zusammen mit den Fehlerkorrekturparitätsdaten;
Aufzeichnungsmittel (7, 8) zum Aufzeichnen der digitalen Videodaten und der Fehlerparität auf ein Aufzeichnungsmedium;
Wiedergabemittel (9, 10) zum Wiedergeben digitaler Videodaten und der Fehlerparität aus dem Aufzeichnungsmedium; und
zweite Speichermittel (12) zum Speichern digitaler Videodaten;
gekennzeichnet durch
erste Speichersteuermittel (3) zum Erzeugen einer Schreibadresse und einer Leseadresse des ersten Speichermittels (2), so daß sich eine Reihenfolge der aus dem ersten Speichermitteln (2) ausgelesenen digitalen Videodaten unterscheidet von der der in die ersten Speichermittel (2) eingeschriebenen digitalen Videodaten, und somit zum Ausführen eines Verschiebeprozesses für die digitalen Videodaten, und die Reihenfolge der digitalen Videodaten zu verändern, indem die digitalen Videodaten unter Verwendung der Schreibadresse in die ersten Speichermittel (2) eingeschrieben werden, und indem die digitalen Videodaten unter Verwendung der Leseadresse aus den ersten Speichermitteln (2) ausgelesen werden;
zweite Speichersteuermittel (4) zum Erzeugen einer Schreibadresse und einer Leseadresse der ersten Speichermittel (2), so daß die Reihenfolge der digitalen Videodaten, die von den ersten Speichermitteln (2) ausgelesen wurden, die gleiche ist, wie die der in die ersten Speichermittel (2) eingeschriebenen digitalen Videodaten, und somit zum Ausführen eines Verzögerungsprozesses für die digitalen Videodaten ohne den Verschiebungsprozeß, indem die digitalen Videodaten unter Verwendung der Schreibadresse in die ersten Speichermittel (2) eingeschrieben werden, und indem die digitalen Videodaten unter Verwendung der Leseadresse aus den ersten Speichermitteln (2) ausgelesen werden;
erste Schaltmittel (5), die auf ein Steuersignal von einem ersten Schaltsteuergerät (19) reagieren, zum selektiven Umschalten zwischen einem ersten geschalteten Zustand, in welchem die ersten Speichersteuermittel (3) verbunden sind mit den ersten Speichermitteln (2), wenn nicht komprimierte digitale Videodaten in die ersten Speichermittel (2) eingeschrieben sind, und einem zweiten Schaltzustand, in welchem die zweiten Speichersteuermittel (4) mit den ersten Speichermitteln (2) verbunden sind, wenn komprimierte digitale Videodaten in die ersten Speichermittel (2) eingeschrieben sind;
Fehlerkorrekturmittel (11) zum Korrigieren von Fehlern in den durch die Wiedergabemitteln (9, 10) wiedergebenen digitalen Videodaten, auf der Basis der Fehlerkorrekturparitätsdaten, die durch die Wiedergabemittel (9, 10) wiedergegeben sind, zum Erzeugen eines Fehlerflag, wenn die digitalen Videodaten nicht durch die Fehlerkorrekturmittel (11) korrigiert werden können, und zum Ausgeben der digitalen Videodaten zusammen mit dem Fehlerflag, welcher die digitalen Videodaten repräsentiert, die nicht korrigiert werden können, in die zweiten Speichermittel (12);
dritte Speichersteuermittel (13) zum Erzeugen einer Schreibadresse und einer Leseadresse der zweiten Speichermittel (12), um so einen Entverschiebeprozeß entgegen dem Verschiebeprozeß für die digitalen Videodaten mit dem Fehlerflag auszuführen, um die ursprüngliche Reihenfolge der digitalen Videodaten wiederzugewinnen, indem die digitalen Videodaten unter Verwendung der Schreibadresse in den zweiten Speichermitteln (12) geschrieben werden, und indem die digitalen Videodaten unter Verwendung der Leseadresse aus den zweiten Speichermitteln (12) ausgelesen werden;
vierte Speichersteuermittel (14) zum Erzeugen einer Schreibadresse und einer Leseadresse für die zweiten Speichermittel (12), um so einen Verzögerungsprozeß für die digitalen Videodaten mit dem Fehlerflag ohne den Verschiebeprozeß auszuführen, indem die digitalen Videodaten unter Verwendung der Schreibadresse in die zweiten Speichermittel (12) geschrieben werden, und indem die digitalen Videodaten unter Verwendung der Leseadresse aus den zweiten Speichermitteln (12) ausgelesen werden;
zweite Schaltmittel (15), die auf ein weiteres Steuersignal von einem zweiten Schaltsteuergerät (20) reagieren, zum selektiven Umschalten zwischen einem ersten geschalteten Zustand, in welchem die dritten Speichersteuermittel (13) mit den zweiten Speichermitteln (12) verbunden sind, wenn nicht komprimierte digitale Videodaten in die zweiten Speichermittel (12) eingeschrieben sind, und einem umgeschalteten Zustand, in welchem die vierten Speichersteuermittel (14) mit den zweiten Speichermitteln (12) verbunden sind, wenn die komprimierten digitalen Videodaten in die zweiten Speichermittel (12) eingeschrieben sind; und
Fehlerverschleierungsmittel (16) zum Verschleiern der Fehler in den von den zweiten Speichermitteln (12) ausgelesenen digitalen Videodaten, die durch den Fehlerflag repräsentiert werden, indem die digitalen Videodaten vorhersagend interpoliert werden, die nicht durch die Fehlerkorrekturmittel (11) in dem ersten umgeschalteten Zustand korrigiert werden konnten, und zum Nichtausführen eines Prozesses zum Verschleiern der Fehler, und zum Ausgeben der komprimierten digitalen Videodaten und des von den Fehlerkorrekturmitteln (11) ausgegebenen Fehlerflag in den zweiten umgeschalteten Zustand.

8. Vorrichtung nach Anspruch 7, weiterhin enthaltend:
Komprimierungsflaghinzufügungsmittel (31) zum Hinzufügen eines Komprimierungsflag, welcher anzeigt, ob die digitalen Videdaten komprimiert sind oder nicht, so daß die ersten Speichermittel (2) mit den zweiten Speichersteuermitteln (4) bzw. den ersten Speichersteuermitteln (3) verbunden ist;
wobei die zweiten Schaltmittel (15) derart umschalten, daß die zweiten Speichermittel (12) mit den dritten Speichersteuermitteln (13) verbunden sind, wenn der Komprimierungsflag anzeigt, daß die digitalen Videodaten nicht komprimiert sind, während die zweiten Schaltmittel (15) umschalten, so daß die zweiten Speichermittel (12) mit den vierten Speichersteuermitteln (14) verbunden sind, wenn der Komprimierungsflag anzeigt, daß die digitalen Videodaten komprimiert sind.

## Revendications

1. Appareil d'enregistrement de données vidéo numériques, comprenant :
des moyens de mémorisation (2) pour mémoriser des données vidéo numériques entrées dans ledit appareil ; et
des moyens d'enregistrement (7, 8) pour enregistrer les données vidéo numériques lues à partir desdits premiers moyens de mémorisation sur un support d'enregistrement ; caractérisé par
des premiers moyens de commande de mémoire (3) pour générer une adresse d'écriture et une adresse de lecture desdits moyens de mémorisation (2) de façon qu'un ordre des données vidéo numériques lues à partir desdits moyens de mémorisation (2) soit différent de celui des données vidéo numériques écrites dans lesdits moyens de mémorisation (2) ;
des deuxièmes moyens de commande de mémoire (4) pour générer une adresse d'écriture et une adresse de lecture desdits moyens de mémorisation (2) de façon qu'un ordre des données vidéo numériques lues à partir desdits moyens de mémorisation (2) soit le même que celui des données vidéo numériques écrites dans lesdits moyens de mémorisation (2) ; et
des moyens de commutation (5) répondant à un signal de commande provenant d'un contrôleur de commutation (19), pour effectuer une commutation sélective entre un premier état commuté dans lequel lesdits premiers moyens de commande de mémoire (3) sont connectés auxdits moyens de mémorisation (2) lorsque des données vidéo numériques non comprimées sont écrites dans lesdits moyens de mémorisation (2) et un second état commuté dans lequel lesdits deuxièmes moyens de commande de mémoire (4) sont connectés auxdits moyens de mémorisation (2) lorsque les données vidéo comprimées sont écrites dans lesdits moyens de mémorisation (2).

2. Appareil selon la revendication 1, dans lequel lesdits premiers moyens de commande de mémoire (3) génèrent l'adresse d'écriture et l'adresse de lecture desdits premiers moyens de mémorisation (2) afin de réaliser un processus de mélange des données vidéo numériques, pour changer l'ordre des données vidéo numériques en écrivant les données vidéo numériques en utilisant l'adresse d'écriture dans lesdits premiers moyens de mémorisation (2) et en lisant les données vidéo numériques en utilisant l'adresse de lecture dans lesdits premiers moyens de mémorisation (2) ; et dans lequel
lesdits deuxièmes moyens de commande de mémoire (4) génèrent l'adresse d'écriture et l'adresse de lecture desdits premiers moyens de mémorisation (2) afin de réaliser un processus de retard pour les données vidéo numériques sans le processus de mélange en écrivant les données vidéo numériques en utilisant l'adresse d'écriture dans lesdits premiers moyens de mémorisation (2) et en lisant les données vidéo numérique en utilisant l'adresse de lecture dans lesdits premiers moyens de mémorisation (2).

3. Appareil de reproduction de données vidéo numériques, comprenant :
des moyens de reproduction (9, 10) pour reproduire des données vidéo numériques à partir d'un support d'enregistrement ; et
des moyens de mémorisation (12) pour mémoriser des données vidéo numériques reproduites par lesdits moyens de reproduction (9, 10) ; caractérisé par
des premiers moyens de commande de mémoire (13) pour générer une adresse d'écriture et une adresse de lecture desdits moyens de mémorisation (12) de façon qu'un ordre des données vidéo numériques lues à partir desdits moyens de mémorisation (12) soit différent de celui des données vidéo numériques écrites dans lesdits moyens de mémorisation (12) ;
des deuxièmes moyens de commande de mémoire (14) pour générer une adresse d'écriture et une adresse de lecture desdits moyens de mémorisation (12) de façon qu'un ordre des données vidéo numériques lues à partir desdits moyens de mémorisation (12) soit le même que celui des données vidéo numériques écrites dans lesdits moyens de mémorisation(12) ; et
des moyens de commutation (15) répondant à un signal de commande provenant d'un contrôleur de commutation (20) pour effectuer une commutation sélective entre un premier état commuté dans lequel lesdits premiers moyens de commande de mémoire (13) sont connectés auxdits moyens de mémorisation (12) lorsque des données vidéo numériques non comprimées sont écrites dans lesdits moyens de mémorisation (12), et un second état commuté dans lequel lesdits deuxièmes moyens de commande de mémoire (14) sont connectés auxdits moyens de mémorisation (12) lorsque des données vidéo numériques comprimées sont écrites dans lesdits moyens de mémorisation (12).

4. Appareil selon la revendication 3, dans lequel
lesdits premiers moyens de commande de mémoire (13) génèrent l'adresse d'écriture et l'adresse de lecture desdits moyens de mémoire (12) afin de réaliser un processus de rétablissement pour que les données vidéo numériques retrouvent l'ordre d'origine des données vidéo numériques en écrivant les données vidéo numériques en utilisant l'adresse d'écriture dans lesdits seconds moyens de mémorisation et en lisant les données vidéo numériques en utilisant l'adresse de lecture desdits moyens de mémorisation (12) ; et dans lequel
lesdits deuxièmes moyens de commande de mémoire (14) génèrent l'adresse d'écriture et l'adresse de lecture desdits moyens de mémorisation (12) afin de réaliser un processus de retard pour les données vidéo numériques sans le processus de rétablissement en écrivant les données vidéo numériques en utilisant l'adresse d'écriture dans lesdits moyens de mémorisation (12) et en lisant les données vidéo numériques en utilisant l'adresse de lecture des moyens de mémorisation (12).

5. Appareil selon la revendication 1 ou 2, comprenant des moyens d'addition (6) de données de parité et de correction d'erreurs pour ajouter des données de parité et de correction d'erreurs aux données vidéo numériques lues à partir desdits moyens de mémorisation (2) et délivrer les données vidéo numériques conjointement aux données de parité et de correction d'erreurs.

6. Appareil selon la revendication 3 ou 4, dans lequel lesdites données vidéo numériques comprennent des données de parité et de correction d'erreurs, comprenant en outre des moyens de correction d'erreurs (11) pour corriger des erreurs dans les données vidéo numériques reproduites par lesdits moyens de reproduction (9, 10) sur la base des données de parité et de correction d'erreurs reproduites par lesdits moyens de reproduction (9, 10), générer un indicateur d'erreur lorsque les données vidéo numériques ne peuvent être corrigées par lesdits moyens de correction d'erreurs (11), et délivrer les données vidéo numériques conjointement avec l'indicateur d'erreur représentant les données vidéo numériques qui ne peuvent être corrigées, dans lequel lesdits moyens de mémorisation (12) mémorisent lesdites données vidéo numériques conjointement avec l'indicateur d'erreur délivré à partir desdits moyens de correction d'erreurs (11) ; et des moyens de camouflage d'erreur (16) pour camoufler l'erreur dans les données vidéo numériques représentées par l'indicateur d'erreur lu à partir desdits moyens de mémorisation (12) en interpolant de manière prédictive les données vidéo numériques qui ne pourraient être corrigées par lesdits moyens de correction d'erreurs (11) dans le premier état commuté, et pour ne pas réaliser un processus pour camoufler l'erreur et délivrer les données vidéo numériques comprimées et l'indicateur d'erreur délivré à partir desdits moyens de correction d'erreurs (11) dans le second état commuté.

7. Appareil d'enregistrement et de reproduction de données vidéo numériques, comprenant :
des premiers moyens de mémorisation (2) pour mémoriser des données vidéo numériques entrées dans ledit appareil ;
des moyens d'addition (6) de données de parité et de correction d'erreurs pour additionner des données de parité et de correction d'erreurs aux données vidéo numériques lues à partir desdits premiers moyens de mémorisation (2) et délivrer les données vidéo numériques conjointement avec les données de parité et de correction d'erreurs ;
des moyens d'enregistrement (7, 8) pour enregistrer les données vidéo numériques et les données de parité et de correction d'erreurs sur un support d'enregistrement ;
des moyens de reproduction (9, 10) pour reproduire les données vidéo numériques et les données de parité et de correction d'erreurs à partir dudit support d'enregistrement ; et
des seconds moyens de mémorisation (12) pour mémoriser des données vidéo numériques, caractérisé par
des premiers moyens de commande de mémoire (3) pour générer une adresse d'écriture et une adresse de lecture desdits premiers moyens de mémorisation (2) de façon qu'un ordre des données vidéo numériques lues à partir desdits premiers moyens de mémorisation (2) soit différent de celui des données vidéo numériques écrites sur lesdits premiers moyens de mémorisation (2), et pour ainsi réaliser un processus de mélange des données vidéo numériques pour changer l'ordre des données vidéo numériques en écrivant les données vidéo numériques en utilisant l'adresse d'écriture dans lesdits premiers moyens de mémorisation (2) et en lisant les données vidéo numériques en utilisant l'adresse de lecture desdits premiers moyens de mémorisation (2) ;
des deuxièmes moyens de commande de mémoire (4) pour générer une adresse d'écriture et une adresse de lecture desdits premiers moyens de mémorisation (2) de façon que l'ordre des données vidéo numériques lues à partir desdits premiers moyens de mémorisation (2) soit le même que celui des données vidéo numériques écrites dans lesdits premiers moyens de mémorisation (2) et pour ainsi réaliser un processus de retard pour les données vidéo numériques sans processus de mélange en écrivant les données vidéo numériques en utilisant l'adresse d'écriture dans lesdits premiers moyens de mémorisation (2) et en lisant les données vidéo numériques en utilisant l'adresse de lecture desdits premiers moyens de mémorisation (2) ;
des premiers moyens de commutation (5) répondant à un signal de commande provenant d'un premier contrôleur de commutation (19) pour effectuer une commutation de manière sélective entre un premier état commuté dans lequel lesdits premiers moyens de commande de mémoire (3) sont connectés auxdits premiers moyens de mémorisation (2) lorsque des données vidéo numériques non comprimées sont écrites dans lesdits premiers moyens de mémorisation (2), et un second état commuté dans lequel lesdits deuxièmes moyens de commande de mémoire (4) sont connectés auxdits premiers moyens de mémorisation (2) lorsque des données vidéo numériques comprimées sont écrites dans lesdits premiers moyens de mémorisation (2) ;
des moyens de correction d'erreurs (11) pour corriger des erreurs dans les données vidéo numériques reproduites par lesdits moyens de reproduction (9, 10) sur la base des données de parité et de correction d'erreurs reproduites par lesdits moyens de reproduction (9, 10), générer un indicateur d'erreur lorsque les données vidéo numériques ne peuvent être corrigées par lesdits moyens de correction d'erreurs (11), et délivrer auxdits seconds moyens de mémorisation (12) les données vidéo numériques conjointement avec l'indicateur d'erreur représentant les données vidéo numériques qui ne peuvent être corrigées ;
des troisièmes moyens de commande de mémoire (13) pour générer une adresse d'écriture et une adresse de lecture desdits seconds moyens de mémorisation (12) afin de réaliser un processus de rétablissement s'opposant au processus de mélange pour que les données vidéo numériques avec l'indicateur d'erreur retrouve l'ordre d'origine des données vidéo numériques en écrivant les données vidéo numériques tout en utilisant l'adresse d'écriture dans lesdits seconds moyens de mémorisation (12) et en lisant les données vidéo numériques tout en utilisant l'adresse de lecture desdits seconds moyens de mémorisation (12)
des quatrièmes moyens de commande de mémoire (14) pour générer une adresse d'écriture et une adresse de lecture desdits seconds moyens de mémorisation (12) afin de réaliser un processus de retard pour les données vidéo numériques avec l'indicateur d'erreur sans processus de rétablissement en écrivant les données vidéo numériques en utilisant l'adresse d'écriture dans lesdits seconds moyens de mémorisation (12) et en lisant les données vidéo numériques tout en utilisant l'adresse de lecture desdits seconds moyens de mémorisation (12) ;
des seconds moyens de commutation (15) répondant à un autre signal de commande provenant d'un second contrôleur de commutation (20) pour effectuer une commutation sélective entre un premier état commuté dans lequel lesdits troisièmes moyens de commande de mémoire (13) sont connectés auxdits seconds moyens de mémorisation (12) lorsque les données vidéo numériques non comprimées sont écrites dans lesdits seconds moyens de mémorisation (12) et un second état commuté dans lequel lesdits quatrièmes moyens de commande de mémoire (14) sont connectés auxdits seconds moyens de mémorisation (12) lorsque les données vidéo numériques comprimées sont écrites dans lesdits seconds moyens de mémorisation (12) ; et
des moyens de camouflage d'erreur (16) pour camoufler les erreurs dans les données vidéo numériques représentées par l'indicateur d'erreur lu à partir desdits seconds moyens de mémorisation (12) en interpolant de manière prédictive les données vidéo numériques qui ne pourraient pas être corrigées par lesdits moyens de correction d'erreurs (11) dans le premier état commuté, et pour ne pas réaliser un processus de camouflage de l'erreur et délivrer les données vidéo numériques comprimées et l'indicateur d'erreur délivré à partir desdits moyens de correction d'erreur (11) dans le second état commuté.

8. Appareil selon la revendication 7, comprenant en outre :
des moyens d'addition d'indicateur de compression (31) pour additionner un indicateur de compression indiquant si les données vidéo numériques sont comprimés ou non de telle sorte que lesdits premiers moyens de mémorisation (2) sont connectés auxdits deuxièmes moyens de commande de mémoire (4) ou lesdits premiers moyens de commande de mémorisation (3), respectivement ;
dans lequel lesdits seconds moyens de commutation (15) effectuent une commutation de sorte que lesdits seconds moyens de mémorisation (12) soient connectés auxdits troisièmes moyens de commande de mémoire (13) lorsque l'indicateur de compression indique que les données vidéo numériques ne sont pas comprimées, tandis que lesdits seconds moyens de commutation (15) effectuent une commutation de sorte que lesdits seconds moyens de mémorisation (12) sont connectés auxdits quatrièmes moyens de commande de mémoire (14) lorsque l'indicateur de compression indique que les données vidéo numériques sont comprimées.
